# EUROPEAN PATENT SPECIFICATION

(11) **EP 0 804 791 B1**
(45) Date of publication and mention of the grant of the patent: **09.04.2003**
(21) Application number: 96914352.8
(22) Date of filing: 28.05.1996
(51) Int. Cl.: G11B 20/00, G06F 1/00

(54) **A CD-ROM SOFTWARE PROTECTION SYSTEM**
CD-ROM-SOFTWARESCHUTZSYSTEM
SYSTEME DE PROTECTION DE LOGICIEL DE CD-ROM

(30) Priority: 16.10.1995 GR 95100366
(43) Date of publication of application: 05.11.1997
(73) Proprietor: MLS Laserlock International Inc., 543 52 Thessaloniki (GR)
(72) Inventor: SKALKOS, Petros, GR-546 39 Thessaloniki (GR); KAMATAKIS, John, GR-546 39 Thessaloniki (GR); KAMATAKIS, Nikolaos, GR-546 39 Thessaloniki (GR)
(86) International application number: GR9600013
(87) International publication number: WO97015051

(56) References cited:
- WO-A-95/03655
- DE-A- 3 720 233
- US-A- 5 400 319

## Description

### 1. Introduction

This system is used for the protection of CD-ROM and DVD-ROM software (for PC compatible computers) from illegal copying. This method can be used for CD disks of any size and any CD-ROM format. This system prevents the illegal copying of the PC software using as a "protection key" a specially processed CD-ROM or DVD-ROM disc. A very high degree of software protection is provided due to the fact that this specific CD-ROM can not be copied and due to the existence of an advanced method for the verification of the CD-ROM authenticity.

This system consists of two parts:
a) The specially manufactured CD-ROM
b) The System Software that verifies the CD-ROM authenticity

Previous work in the field of media protection was focused on methods that in practice could only be applied to floppy diskettes (DE-A-37 20 233 Keese Thomas, 22 December 1988). These methods can not be applied directly to CD-ROM due to the very different nature and format of the media.

### 2. Development of the Software Protection System

### 2.1 Modification of the Protected Application Software

The protected Application Software (hereafter referred as Application Code) combines with the special Protection Software (hereafter referred as Protection Code) to form a new Composite Application Code. The Protection Code is placed before the Application Code in order to carry out the initial checks for the verification of the CD-ROM authenticity prior to the execution of the Application Code.

The integration of the Protection Code into the Application Code can be carried out in either the form of objective code or in the form of executable code.

### 2.2 Glass Master production

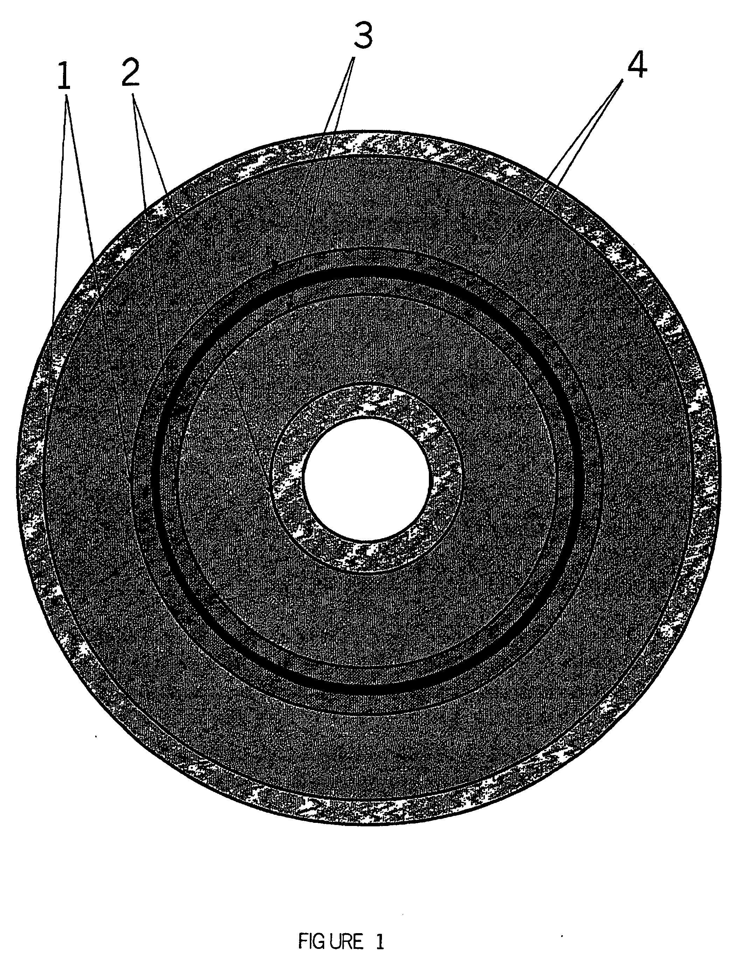

The Composite Application Code that resulted from the procedure defined in paragraph 2.1 together with the rest of the Application files are copied on the Glass Master with the use of special CAD/CAM tools that control this process. Special attention is given to the spatial distribution of the software on the Glass Master. As seen in figure 1 that shows this special Glass Master, a specific ring (3) with width of a few mm is reserved, so that the central region (4) is mechanically processed during a following step, while the adjacent areas on either sides contain the Protection Code and special Encrypted Data that are checked by the Protection Code. This area will be referred hereafter as Protection Ring (3). The Application Code and the Data are stored in the Application Rings areas (1) & (2) of the Glass Master.

### 2.3 Mechanical Processing of the Glass Master

During this phase, the Glass Master undergoes a special mechanical treatment with the use of special equipment that is used for the Glass Master manufacturing. Thus, a homocentric ring (4) of 10 µm width is produced within the central part of the Protection Ring. This ring marks the specific region and is checked by the Protection Code for the verification of the authenticity of the CD-ROM disk and will be referred hereafter as Inspection Ring (4). The polar coordinates of the Inspection Ring are very critical for the verification of the authenticity of the CD-ROM. These parameters are included in the Data of the Protection Code since the polar coordinates of the Inspection Ring are predetermined.

This very special treatment can only be carried out with the use of special CAD/CAM package that controls the Glass Master production machine. The Inspection Ring (4) is seen in Figure 1 that shows the special Glass Master that contains the Software Protection System. The Composite Application Code with the Data are stored in adjacent areas (1) & (2) to the Protection Ring (3) on both sides. The Inspection Ring (4) is located in the middle of the Protection Ring (3). The Glass Master (Figure 1) is used subsequently for the production of the CD-ROM or DVD-ROM disks with special machines (stampers). Although this special processing refers to the CD-ROM Glass Master, it can be applied to any type of Optical Disk regardless of size and format.

### 3. The Operation of the Software Protection System

### 3.1 The Protection Code

The Protection Code is written in Assembly language for Intel 80x86 microprocessors and was developed with the use of the Borland Turbo Assembler. The Microsoft Linker was also used for the linking process. The Protection Code is combined with the Application Code in either objective or executable form.

### 3.2 The Functional Operation of the Protection System

The Software Protection System requires the presence of the original CD-ROM disk in the CD player independent of whether the Application was copied on the hard disk or is executed from the CD disk. During the execution of the Application, initially the Protection Code is executed, inspects the CD-ROM Protection Ring (3) and decodes the polar coordinates of the Inspection Ring (4). Then it checks that the Inspection Ring (4) is at the predefined position thus verifying the authenticity of the CD-ROM. If the CD-ROM is not the original one, then the execution is terminated and the user receives a relative message. Special attention is given during the Software development phase, so that the verification process does not conflict with the operation of the CD-ROM device driver.

Only after the authenticity of the CD-ROM is verified, the execution of the application is allowed in either a DOS or Windows environment. In a case that the original CD-ROM is absent, the Application execution does not commence, while at the same time a relative message on the user screen appears.

This system can achieve a very high degree of protection because it is impossible to copy the original CD-ROM. This is due to the existence of the Inspection Ring on the CD-ROM disk. The most common ways of illegal copying of CD-ROMs are:
a) CD-ROM copying with CDR (CD Recordable) equipment
b) Glass Master copying & reproduction
c) Application copying on the hard disk
d) Protection Code "cracking" with the use of Software or Hardware Debugger

Cases (a), (b) & (c) are prevented with the help of the Inspection Ring that as a destroyed area makes every possible recording procedure to fail. Case (d) is prevented thanks to the unique integration of the authenticity verification procedure into the Application software in a way that can not be cracked by experienced programmers and hackers. In particular, the Protection Code prevents the introduction of Breakpoints with the use of Software & hardware Debugger, thus making it impossible to crack the protected software.

## Claims

1. A method for protecting an optical disk based application software from illegal copying by use of a specially processed optical disk, comprising the steps of:
manufacturing a Glass Master;
treating the Glass Master with a Glass Master production machine to produce application code areas (1, 2) and a protection ring (3) having an inspection ring (4) within a central part of the protection ring, the inspection ring having predefined position parameters including polar coordinates;
storing a composite application code including the inspection ring's predefined position parameters on the Glass Master in the application code area and protection ring, the composite application code comprising application software and protection code;
producing a specially processed optical disk from the Glass Master;
checking the position parameters of the inspection ring during use of the specially processed disk;
inspecting the predefined position parameters stored in the protection ring and verifying whether the measured location parameters agree with the stored location parameters in a process that is transparent to a user; and
protecting the optical disk based software application from being illegally copied by terminating execution of the application software if the measured location parameters and the stored location parameters do not agree.

2. The method of claim 1, wherein the producing step comprises:
producing a specially processed optical disk through a fabrication process in a successive order from the Glass Master to a Father Stamper optical disk to a Mother Stamper optical disc, to a Production Stamper optical disk, and to the specially processed optical disk that is distributed in the market.

3. The method of claim 1, wherein the storing step comprises:
storing a composite application code including the inspection ring's predefined location parameters on the Glass Master in the application and protection rings, the predefined location parameters including position, polar coordinates and width.

4. The method of claim 1, wherein the comparing step is carried out prior to the execution of the software application, thus not requiring the further presence of the specially processed optical disk for verification purposes.

5. The method of claim 1, wherein the comparing step is transparent to a user and does not need provision of a special key-code to protect the optical disk based software application from illegal copying.

6. A Glass Master for producing optical disk based software applications protected from illegal copying on a specially processed optical disk, the Glass Master comprising:
a series of homocentric ring areas (1, 2, 3), the ring areas being an application code area (1, 2) followed by at least one protection ring (3) in alternating succession with another application code area, with the innermost and outermost rings being application code areas;
an application code area (1, 2) containing a composite application code and data, including the software application and a protection code;
a protection ring (3) being an area of the Glass Master at a specific position, specially treated to provide at least one homocentric ring area that is reserved for storage of composite application code including the protection code and encrypted data, and to provide an inspection ring (4);
a composite application code which functions to protect the software application from illegal copying, which function is transparent to a user;
an inspection ring (4) provided within the protection ring (3), the inspection ring formed by the permanent destruction of the optical properties of a specific ring area in the middle of the protection ring to form a continuous spiral track that has the form of a continuous pit, and having predefined position parameters; and
encrypted data stored in the areas of the protection ring that are adjacent to the inspection ring, which data include the predefined location parameters of the inspection ring and information about the protected application software.

7. The Glass Master of claim 6, wherein the protection ring contains code that can be accessed only by special software methods.

8. The Glass Master of claim 6, wherein the composite application code of the protection ring causes an operating system to issue a specific error code message on any attempt to access the composite application code.

9. The Glass Master of claim 6, wherein the inspection ring has predefined position parameters including polar coordinates and width.

10. The Glass Master of claim 6, wherein the composite application code comprises an algorithm of the protection code placed in the beginning of the software application thus forming a part of the composite application code that is distributed into the application rings.

11. The Glass Master of claim 6, wherein the encrypted data stored in the protection ring which indicate the predefined location parameters of the inspection ring are also contained in the protection code that is part of the composite application code.

## Patentansprüche

1. Eine Methode um eine Applikations-Software die auf einer optischen Scheibe basiert, vom illegalen Kopieren zu schützen, in dem man eine speziell bearbeitete optische Scheibe benutzt, einschließlich des Vorganges der Herstellung:
eines Glass masters;
Bearbeitung des Glass masters mit einer Glassmaster Produktionsmaschine um Applikationscode-Bereiche zu produzieren, und einen Schutzring der im zentralen Teil einen Inspektionsring besitzt, welcher vordefinierte Positionsparameter, inklusive polarer Koordinaten, besitzt;
lagern eines zusammengesetzten Applikationscodes einschließlich der vordefinierten Positionsparameter des Inspektionsrings auf dem Glass master im Bereich des Applikationscodes und des Schutzrings, der zusammengesetzte Applikationscode besteht aus dem Applikations-Softwarecode und dem Schutzcode;
indem eine spezifisch hergestellte optische Scheibe vom Glass master produziert wird;
kontrolliert die Positionsparameter des Inspektionsrings während der Benutzung der speziell hergestellten Scheibe
kontrolliert die im Schutzring gespeicherten vordefinierten Positionsparameter und bestätigt, einem dem Anwender transparenten Verfahren, ob die abgemessene Bereichsparameter mit den gespeicherten Positionsparametern übereinstimmen.
schützen der auf der optischen Scheibe basierenden Softwareapplikation vom illegalen Kopieren durch Beendigung der Applikationssoftware wenn die gemessenen Bereichsparameter mit den gespeicherten Bereichsparameter nicht übereinstimmen.

2. Die Methode der Behauptung 1 die den Produktionsschritt einschließt:
Produktion einer speziell behandelten optischen Scheibe in einem Produktionsprozess, in einer aufeinanderfolgenden Reihenfolge vom dem Glass master zu einer Vater-Stamper optischen Scheibe zu einer Mutter- Stamper optischen Scheibe, zu einer Produktions-Stamper optischen Scheibe, und zu der speziell behandelten optischen Scheibe die auf dem Markt verteilt wird.

3. Die Methode der Behauptung 1 die den Speichervorgang einschließt:
Speichern des zusammengesetzten Applikationscodes einschließlich der vordefinierten Bereichsparameter des Inspektionsrings auf dem Glass master in den Applikations- und Schutzringen, der vordefinierten Bereichsparameter einschließlich Position, polarer Koordinaten und Breite.

4. Die Methode der Behauptung 1, in der der Vergleichsvorgang vor der Ausführung der Softwareapplikation stattfindet, ohne dass das zur Bestätigung das Vorhandensein der speziell behandelten optischen Scheibe nötig ist.

5. Die Methode der Behauptung 1, in der der Vergleichsvorgang für den Benutzer transparent ist und keinen speziellen Schlüsselcode benötigt um die auf der optischen Scheibe basierende Softwareapplikation vom illegalen kopieren zu schützen.

6. Eine Glass master für die Produktion von auf der optischen Scheibe basierenden Softwareapplikationen die auf einer speziell behandelten optischen Scheibe vom illegalen Kopieren geschützt sind, der Glass master schließt ein:
eine Serie von homozentrischen Ringbereichen, wobei die Ringbereiche ein Applikationscodebereich ist dem mindestens ein Schutzring in alternierender Folge mit einem weiteren Applikationscodebereich folgt; wobei der innerste und äußerste Ring Applikationscodebereiche sind.
ein Applikationscodebereich der einen zusammengesetzten Applikationscode und Daten beinhaltet, einschließlich der Softwareapplikation und eines Schutzcodes.
ein Schutzring ist ein Bereich des Glass Masters an einer spezifischen Position, besonders behandelt um mindestens einen homozentrischen Ringbereich bereitzustellen, der für das Speichern des zusammengesetzten Applikationscodes einschließlich des Schutzcodes und der verschlüsselten Daten reserviert ist und um einen Inspektionsring bereitzustellen;
ein zusammengesetzter Applikationscode der funktioniert um die Softwareapplikation vom illegalen Kopieren zu schützen, dessen Funktion für den Benutzer transparent ist;
ein Inspektionsring der im. Schutzring bereitsteht, der Schutzring entsteht während der permanenten Zerstörung des optischen Eigentums von einem oder mehren spezifischen Ringbereichen in der Mitten des Schutzrings um eine fortlaufende Spiralspur zu formen, welchen die Form eines fortlaufenden Grabens hat, und vordefinierten Positionsparameter besitzt; und
Verschlüsselte Daten die in den Bereichen des Schutzrings gespeichert sind die zum Inspektionsring angrenzend sind, dessen Daten die vordefinierten Bereichsparameter des Inspektionsrings und Informationen über die geschützte Applikationssoftware beinhalten.

7. Der Glass master der Behauptung 6 in dem der Schutzring einen Kode besitzt auf den man nur durch bestimmte Softwaremethoden Zugang hat.

8. Der Glass master der Behauptung 6, in dem der zusammengesetzte Applikationscode des Schutzrings das Operationssystem bei jedem Versuch sich Zugang zu dem zusammengesetzten Applikationscode zu schaffen dazu bringt eine spezifische Fehlercodemeldung zu bringen.

9. Der Glass master der Behauptung 6, in dem der Inspektionsring vordefinierte Positionsparameter inklusive polarer Koordinaten und weite besitzt.

10. Der Glass master der Behauptung 6, in dem der zusammengesetzte Applikationscode besteht aus einem Algorithmus des Schutzcodes der am Anfang der Softwareapplikation platziert ist um ein Stück des zusammengesetzten Applikationscodes zu formen, der in die Applikationsringe verteilt wird.

11. Der Glass master der Behauptung 6, in dem die verschlüsselten Daten die im Schutzring gespeichert sind, welche die vordefinierten Bereichsparameter des Inspektionsrings indizieren, welche auch im Schutzcode enthalten sind, der ein Stück des zusammengesetzten Applikationscodes ist.

## Revendications

1. Une methode pour la protection d' une application de logiciel fondee sur un disque optique par la copie illegale via un disque optique specialement elabore qui comprend le pas:
de la fabrication d'un glass master,
en le guerissant avec une machine de production glass master pour qu' elle produise des regions de code d'application et un anneau de protection comprenant un autre anneau d'inspection dans une de ses parties centrales. L' anneau d'inspection predetermine les parametres de place comprenant des ordonnees polaires
stockage d'un code d'application complexe qui comprend les parametres de place predetermines de l'anneau d'inspection au glass master dans la region de code d' application et dans l' anneau de protection. Ce code complexe d'application comprend l' application de logiciel et le code de protection
production d'un disque optique specialement elabore par le glass master
controle des parametres de place que l'anneau d'inspection comprend pendant la duree de l'emploi du disque specialement elabore,
en inspectant les parametres predetermines de place qui sont stockes dans l'anneau de protection et en verifiant si les parametres de place pris en compte sont d'accord avec les parametres de place stockes via une procedure qui est transparente a l'utilisateur et
en protegeant l'application de logiciel fondee sur le disque optique par la copie illegale via la terminaison de l'execution de l'application de logiciel si les parametres de place pris en compte et les parametres de place stockes ne sont pas d'accord.

2. La methode de la pretention 1 ou se trouve le pas produisant comprend:
la production d' un disque optique specialement elabore via une procedure de traitement dans un ordre successif par le glass master au stamper de pere disque optique au stamper de mere disque optique, au stamper du disque de production optique, et au disque optique specialement elabore qui est distribue au marche.

3. La methode de la pretention 1 ou se trouve le pas stockant comprend:
le stockage d'un code d'application complexe qui comprend les parametres predetermines de place de l'anneau d'inspection au glass master aux anneaux d' application et de protection et des parametres predetermines de place qui comprennent la place, les ordonnees polaires et la largeur.

4. La methode de la pretention 1, ou le pas de comparaison est realise avant l'execution de l'application de logiciel, en consequence non en exigeant la presence plus longue du disque optique specialement elabore pour des raisons de controle.

5. La methode de la pretention 1, ou le pas de comparaison est transparent a l' utilisateur et n'a pas besoin de la prestation d' un base-code expert qu' il protegera l' application de logiciel fondee sur un disque oprtique de la copie illegale.

6. Le Glass master pour la production des applications de logiciel fondees sur un disque optique et protegees par la copie illegale sur un disque optique specialement elabore. Le Glass Master comprend:
une serie de regions homocentrees d'anneaux qui sont une region de code d'application suivie au moins d'un anneau de protection echangee de la succession avec une autre region de code d'application, dont les anneaux plus externes et les plus internes sont des regions de code d'application
une region de code d'application qui contient des codes et des éléments d' une application complexe, comprise de l'application de logiciel et d'un code de protection
un anneau de protection qui est un secteur glass master en une mesure concrete, considere specialement pour qu'il offre au moins une region homocentree d'anneaux qui est maintenue pour le stockage du code d'application complexe qui comprend le code de protection et les elements cryptografes, et pour I' offre d' un anneau d'inspection
un code d'application complexe qui fonctionne pour qu'il protege l'application de logiciel par la copie illegale. Le fonctionnement de ce code est transparent a I' utilisateur
un anneau d' inspection qui est offerte dans l'anneau de protection qui est forme par la destruction permanente des proprietes optiques des regions concretes au milieu de l'anneau de protection en formant un trajet de bande touche qui a la forme d'un pit continue, et predetermine des parametres de place, et
elements cryptografes, stockes dans les secteurs de l'anneau de protection qui sont a cote de l'anneau d'inspection. Ces elements comprennent les parametres predetermines de place de l'anneau et des informations d'inspection sur les programmes proteges d'applications.

7. Le Glass master de la pretention 6 ou l'anneau de protection contient le code qui peut etre rapproche seulement avec les methodes speciales de logiciel.

8. Le Glass master de la pretention 6, ou le code complexe d'application de l'anneau de protection cree un systeme fonctionnel pour qu'il publie un message concret de code d'erreur qui peut prevenir des efforts possibles d' un rapprochement du code complexe d'application.

9. Le Glass master de la pretention 6, ou l'anneau d'inspection a preditermine les parametres de place qui comprennent les ordonnees polaires et la largeur.

10. Glass master de la pretention 6, ou le code complexe d'application comprend un algorithme du code de protection qui est place au principe de l'application de logiciel qui constitue ainsi une partie du code complexe d'application qui est distribue aux anneaux d'application.

11. Le Glass master de la pretention 6, ou les elements cryptografees stockes dans l'anneau de protection qui montre les parametres predetermines de place de l'anneau d'inspection sont compris egalement au code de protection qui est partie du code complexe d'application.
